# EUROPEAN PATENT SPECIFICATION

(11) **EP 1 169 520 B1**
(45) Date of publication and mention of the grant of the patent: **11.02.2004**
(21) Application number: 00920870.3
(22) Date of filing: 10.04.2000
(51) Int. Cl.: E03B 3/03

(54) **FLAT PACK WATER BUTT**
ZUSAMMENLEGBARES WASSERFASS
CONTENEUR D'EAU A CONDITIONNEMENT PLAT

(30) Priority: 10.04.1999 GB 9908122
(43) Date of publication of application: 09.01.2002
(73) Proprietor: Manning, Peter Anthony, Winterbourne Down, Bristol BS36 1EN (GB)
(72) Inventor: Manning, Peter Anthony, Winterbourne Down, Bristol BS36 1EN (GB)
(74) Representative: Marles, Alan David
(86) International application number: PCT/GB2000/001374
(87) International publication number: WO 2000/061881

(56) References cited:
- EP-A- 0 286 271
- WO-A-93/11310
- DE-A- 3 233 881
- DE-U- 9 201 740
- GB-A- 1 005 603

## Description

This invention relates to a flat pack water butt.

Water butts are well known outdoor items for both domestic and industrial use. They are usually barrel or drum shape and made of plastic.

Water butts are, however, relatively bulky and limit the positions for location because of their size and are difficult to carry and transport from the retailer. Also storage and transport can be a bulky space using problem for the manufacturer, distributor and retailer.

GB-A-1005603 and EP-A-0286271 disclose collapsible water containers intended for transporting liquid in bulk. Each container is a stand-alone item which can be moved around individually. The containers each have a base, a pair of end structures, front and rear sections and an internal liner but the containers are not designed for modular connection to others.

According to the present invention there is provided a water butt comprising two end structures, a base section, a front section and a rear section, the front and rear sections being clipped to the end structures so as to form with the base section a box, the water butt also providing a waterproof liner bag disposed within said box, characterised in that said end structures having lengthwise extending shoulders against the inside of which the front and rear sections bear, each end structure providing said lengthwise extending shoulders on both sides to enable modular connection to further front and rear sections and a further end structure.

Preferred features of the present invention are set out in the attached subclaims.

In one preferred arrangement, there is provided an outlet in the base to which a clear plastic hose is fitted. The hose is clipped to the side of the butt and extends to the top, allowing the water level of the butt to be viewed in the tube. By removing the tube from the clips, one can dispense the water from the butt.

The design of the end structure allows other butts to be constructed to the outsides of the end structures, therefore, the design is a modular flat pack water butt system. The butts can be connected by a pipe fitting between the butts through holes at the top of the end structures.

The end structures can also be used, in conjunction with, or separate from, the water butt, or butts, as end construction pieces for shelving units or cupboard units and shelves can also be fitted to the water butt exterior.

A specific embodiment of the invention will now be described by way of example with reference to the accompanying drawing in which:
Figure 1 shows in perspective, the water butt assembled.
Figure 2 illustrates the liner pushing the base and sides.
Figure 3 shows the butt disassembled.
Figure 4 shows a plan view section of the butt.
Figure 5 shows two buts connected.
Figure 6 shows in perspective, the bag liner connector.
Figure 7 shows the preferred clipping detail.

Referring to the drawing the water butt comprises two end structures **10,** a base section **12,** a front section **14,** a rear section **15,** a waterproof liner bag **16,** a lid **17** and a clear plastic water level viewing and outlet hose **18.**

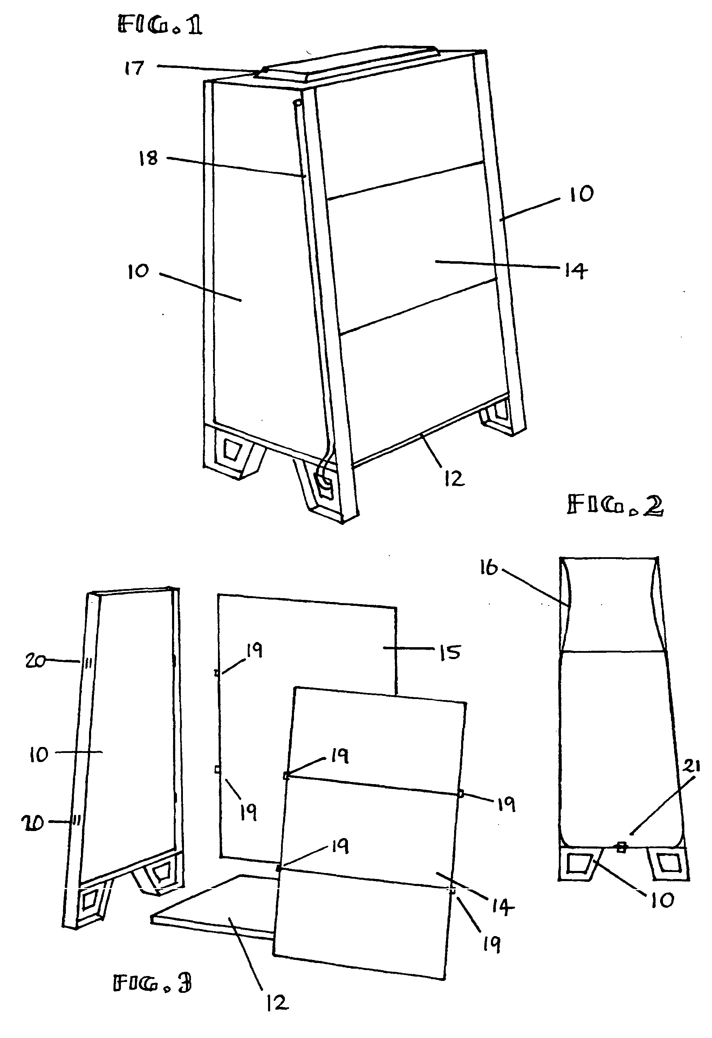

In order to assemble the water butt both end structures **10** are stood up and the rear section **15** is positioned inserting clips **19** into slots **20** in the end structure as shown in Fig 3. The base section **12** is attached and the waterproof liner bag **16** is positioned on the base section **12.** A hole is cut in the bag **16** to align with the hole in the base section **12.** The hose connector fitting **21** is secured to he base section **12** to ensure a watertight fit. The clear plastic water level viewing and outlet hose **18** is attached to the hose connector fitting **21**. The bag **16** is lifted and attached to rear section **15.** The front section **14** is inserted, slotting clips **19** into slots **20** in the end structure, as shown in Fig 1. The bag **16** is also attached to the front section **14**. The lid **17** is fitted after a hole is cut to allow drainpipe access. The weight of the water pushes against the rear section **15,** the base section **12,** and the front section **14** within the waterproof liner bag **16** as shown in Fig 2.

The clear plastic hose is clipped up one side of the water butt as shown in Fig 1.

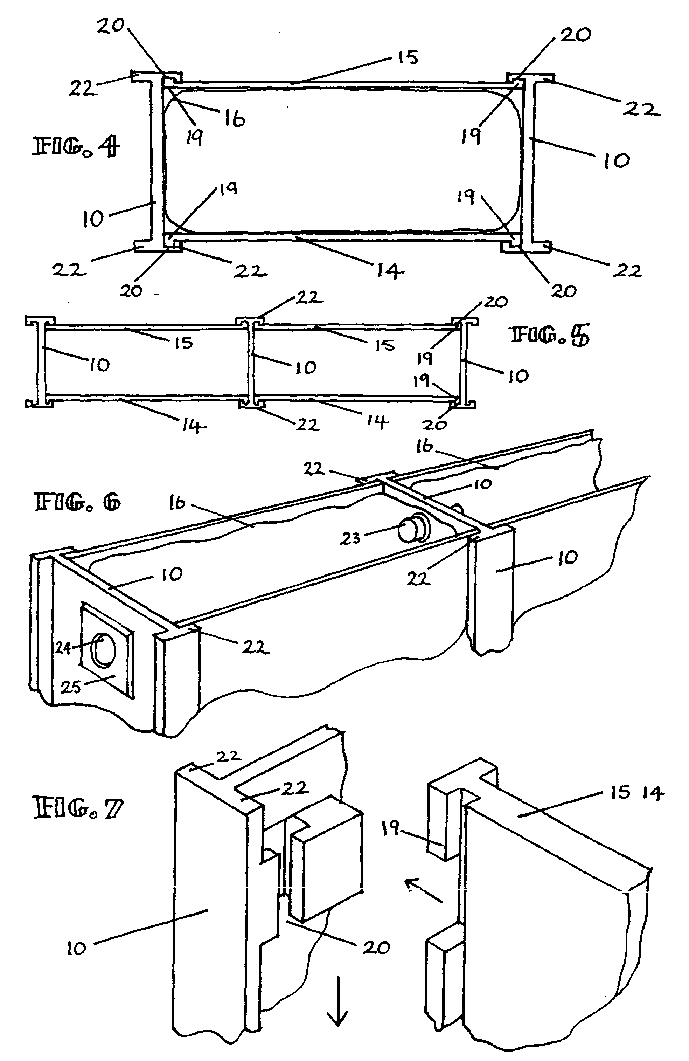

The shoulder details **22** on the end structures **10,** retain the front section **14** and the rear section **15** with the weight pressure of the water in the bag liner **16** pushing outwards. The clips **19** locate into slots **20** on end structures **10** ensuring a rigid construction, as shown in Fig 4.

The butts can be adjoined to other butts, therefore, increasing the water volume in a modular fashion. Front section **14** and rear section **15** connect via clips **19** into slots **20** pushing behind shoulders **22** on the outside of the end structure **10** of the existing assembled butt, as shown in Fig 5.

The bag liners **16** are joined by connector piece **23** through end structure **10** using the thin hole cut out detail **24** with reinforcement area **25**, on end structures **10** as shown in Fig 6.

Figure 7 shows a preferred clipping method, front section **14** and near section **15** connect to end structures **10** by clips detail **19** pushing through and slipping down behind slot detail **20** on shoulder **22** on end structure **10**.

## Claims

1. A water butt comprising two end structures (10), a base section (12), a front section (14) and a rear section (15), the front and rear sections (14,15) being clipped to the end structures (10) so as to form with the base section (12) a box, the water butt also providing a waterproof liner bag (16) disposed within said box **characterised in that** said end structures (10) having lengthwise extending shoulders (22) against the inside of which the front and rear sections (14,15) bear, each end structure (10) providing said lengthwise extending shoulders (22) on both sides to enable modular connection to further front and rear sections and a further end structure.

2. A water butt as claimed in claim 1 wherein the end structures (10) provide base shoulders against the inside of which the base section (12) bears.

3. A water butt as claimed in claim 1 or claim 2 wherein the clipping of the front and rear sections (14,15) to the end structures (10) is by means of a number of clip attachments (19).

4. A water butt as claimed in claim 3 wherein each clip attachment (19) is constituted by a T-shaped slot (20) provided in the end structure (10) and a mating T-shaped portion (19) of the front/rear section (14,15).

5. A water butt as claimed in claim 1 wherein a clear hose (18) communicates with the inside of the liner bag (16) so as in use to provide an indication of the water level inside the liner bag (16).

6. A water butt as claimed in claim 1 wherein an outlet connector (21) communicates with the inside of the liner bag (16) adjacent the base section (12).

7. A water butt as claimed in claim 1 wherein adjacent the top of each end structure is a thin hole cut out detail (24) to facilitate communication via a connector between said liner bag (16) and another liner bag.

8. A water butt as claimed in claim 1 wherein a lid (17) is provided.

9. A water butt as claimed in claim 1 wherein each end structure (10) is narrower at its top than at its base.

10. A water butt as claimed in claim 9 wherein the front of each end structure (10) tapers inwardly from its base toward its top.

## Patentansprüche

1. Wasserfass, umfassend zwei Endkonstruktionen (10), einen Bodenteil (12), einen vorderen Teil (14) und einen hinteren Teil (15), wobei der vordere und der hintere Teil (14, 15) an den Endkonstruktionen (10) gehaltert sind, um mit dem Bodenteil (12) einen Kasten zu bilden, wobei das Wasserfass auch einen wasserdichten Auskleidungsbeutel (16) bereitstellt, der in dem genannten Kasten angeordnet ist, **dadurch gekennzeichnet, dass** die genannten Endkonstruktionen (10) sich längs erstreckende Schultern (22) haben, an deren Innenseite der vordere und der hintere Teil (14, 15) anliegen, wobei jede Endkonstruktion (10) die genannten sich längs erstreckenden Schultern (22) auf beiden Seiten aufweist, um eine modulare Verbindung an weitere vordere und hintere Teile und eine weitere Endkonstruktion zu ermöglichen.

2. Wasserfass nach Anspruch 1, bei dem die Endkonstruktionen (10) untere Schultern aufweisen, an deren Innenseite der Bodenteil (12) anliegt.

3. Wasserfass nach Anspruch 1 oder Anspruch 2, bei dem das Haltern des vorderen und des hinteren Teils (14, 15) an den Endkonstruktionen (10) mittels einer Anzahl von Haltevorrichtungen (19) erfolgt.

4. Wasserfass nach Anspruch 3, bei dem jede Haltevorrichtung (19) sich aus einem in der Endkonstruktion (10) bereitgestellten T-förmigen Schlitz (20) und einem passenden T-förmigen Teil (19) des vorderen/hinteren Teils (14, 15) zusammensetzt.

5. Wasserfass nach Anspruch 1, bei dem ein klarer Schlauch (18) mit der Innenseite des Auskleidungsbeutels (16) kommuniziert, um im Gebrauch eine Anzeige des Wasserstands im Inneren des Auskleidungsbeutels (16) zu erbringen.

6. Wasserfass nach Anspruch 1, bei dem ein Auslassverbinder (21) angrenzend an das Bodenteil (12) mit der Innenseite des Auskleidungsbeutels (16) kommuniziert.

7. Wasserfass nach Anspruch 1, bei dem sich neben dem oberen Ende jeder Endkonstruktion ein dünnes Lochausnehmungsdetail (24) befindet, um die Kommunikation zwischen dem genannten Auskleidungsbeutel (16) und einem anderen Auskleidungsbeutel über einen Verbinder zu erleichtern.

8. Wasserfass nach Anspruch 1, bei dem ein Deckel (17) bereitgestellt ist.

9. Wasserfass nach Anspruch 1, bei dem jede Endkonstruktion (10) an ihrem oberen Ende schmäler ist als an ihrem unteren Ende.

10. Wasserfass nach Anspruch 9, bei dem sich die Vorderseite jeder Endkonstruktion (10) von ihrem unteren Ende in Richtung auf das obere Ende nach innen verjüngt.

## Revendications

1. Un conteneur d'eau qui comprend deux structures d'extrémité (10), une section formant fond (12), une section avant (14) et une section arrière (15), les sections avant et arrière (14, 15) étant agrafées avec les structures d'extrémité (10) de sorte à former une boîte avec la section formant fond (12), le conteneur d'eau étant par ailleurs pourvu d'un sac de doublure imperméable (16) disposé à l'intérieur de ladite boîte, **caractérisé en ce que** lesdites structures d'extrémité (10) présentent des épaulements (22) qui s'étendent longitudinalement, contre l'intérieur desquels portent les sections avant et arrière (14, 15), chaque structure d'extrémité (10) offrant ces épaulements (22) qui s'étendent longitudinalement sur les deux côtés pour rendre possible un raccordement modulaire à d'autres sections avant et arrière, et à une autre structure d'extrémité.

2. Un conteneur d'eau selon la revendication 1, dans lequel les structures d'extrémité (10) offrent des épaulements de fond contre l'intérieur desquels porte la section formant fond (12).

3. Un conteneur d'eau selon la revendication 1 ou la revendication 2, dans lequel l'agrafage des sections avant et arrière (14, 15) sur les structures d'extrémité (10) est effectué au moyen de plusieurs agrafes de fixation (19).

4. Un conteneur d'eau selon la revendication 3, dans lequel chaque fixation agrafable (19) est constituée par une fente en forme de T (20) prévue dans la structure d'extrémité (10) et une partie en forme de T correspondante (19) de la section avant/arrière (14, 15).

5. Un conteneur selon la revendication 1, dans lequel un flexible transparent (18) communique avec l'intérieur du sac de doublure (16) de sorte à fournir, pendant l'utilisation, une indication du niveau de l'eau à l'intérieur du sac de doublure (16).

6. Un conteneur d'eau selon la revendication 1, dans lequel un raccord de sortie (21) communique avec l'intérieur du sac de doublure (16) à proximité de la section formant fond (12).

7. Un conteneur d'eau selon la revendication 1 dans lequel, à proximité du haut de chaque structure d'extrémité, se trouve un détail formant un petit trou découpé (24) pour faciliter la communication, au moyen d'un raccord, entre ledit sac de doublure (16) et un autre sac de doublure.

8. Un conteneur d'eau selon la revendication 1, dans lequel est prévu un couvercle (17).

9. Un conteneur d'eau selon la revendication 1, dans lequel chaque structure d'extrémité (10) est plus étroite au sommet qu'à la base.

10. Un conteneur d'eau selon la revendication 9, dans lequel le devant de chaque structure d'extrrémité s'amincit vers l'intérieur depuis sa base jusqu'à son sommet.
